Europäisches Patentamt

**European Patent Office**

**Office européen des brevets**

(19)

(11) Veröffentlichungsnummer: **0 002 203**
**B1**

(12) **EUROPÄISCHE PATENTSCHRIFT**

(45) Veröffentlichungstag der Patentschrift:
05.08.81

(51) Int. Cl.³: **C 02 F 1/42**

(21) Anmeldenummer: **78101369.3**

(22) Anmeldetag: **15.11.78**

(54) **Vorrichtung zur Vollentsalzung von Wasser.**

(30) Priorität: **25.11.77 DE 2752581**

(43) Veröffentlichungstag der Anmeldung:
**13.06.79 Patentblatt 79/12**

(45) Bekanntmachung des Hinweises auf die Patenterteilung:
**05.08.81 Patentblatt 81/31**

(84) Benannte Vertragsstaaten:
**BE CH FR GB LU NL SE**

(56) Entgegenhaltungen:
**BE-A-699 122**
**FR-A-1 097 951**
**FR-A-1 378 835**
**FR-A-2 177 450**
**US-A-3 771 660**

(73) Patentinhaber: **Keil, Wolfgang, Kopernikusstrasse 9,**
**D-4044 Kaarst 1 (DE)**

(72) Erfinder: **Keil, Wolfgang, Kopernikusstrasse 9,**
**D-4044 Kaarst 1 (DE)**

(74) Vertreter: **Paul, Dieter-Alfred, Dipl.-Ing., Erftstrasse 82,**
**D-4040 Neuss 1 (DE)**

## Vorrichtung zur Vollentsalzung von Wasser

Die Erfindung betrifft eine Vorrichtung zur Vollentsalzung von Wasser mit einem zylindrischen, druckfesten Mantelgefäss, zwischen dessen Anschlüssen für den Wasserzu- und -ablauf eine an beiden Stirnseiten wasserdurchlässige Patrone mit einem Mischbett aus Kationen- und Anionenaustauscherharzen herausnehmbar fixiert und dabei gegen seitliches Vorbeiströmen abgedichtet ist.

Derartige Vorrichtungen sind aus der FR-A 1 097 951, der FR-A 2 177 450, der US-A 3 771 660 und der BE-A 699 122 bekannt. Sie zeigen Vorrichtungen zur Wasserbehandlung, bei denen das Behandlungsmedium, also Kationen- und Anionenaustauscherharze, in Patronen angeordnet ist, die dann in ein Mantelgefäss eingesetzt sind. Die Patronenausbildung hat den Vorteil, dass sich das Behandlungsmedium schnell und leicht austauschen und regenerieren lässt.

Für den letzteren Vorgang müssen die Patronen allerdings einer Regenerierstation zugeführt werden, was Transport- und Regenerierungskosten verursacht. Ausserdem ist diese Regenerierung relativ umständlich, da die Patronen zunächst entwässert, anschliessend verpackt und dann befördert werden müssen. Bei der Regenerierung fallen zudem Salze sowie die hierfür erforderlichen überschüssigen Chemikalien (Salzsäure und Natronlauge) als Abfallstoffe an.

Dies wird jedoch in Kauf genommen, weil der Ersatz durch jeweils neue Patronen zu teuer wäre. Dies beruht darauf, dass die Patronen zumindest bei den Vorrichtungen, die in der FR-A 1 097 951, der US-A 3 771 660 und der BE-A 699 122 beschrieben sind, so gestaltet werden müssen, dass sie den gesamten Wasserdruck aushalten können. Dementsprechend dickwandig müssen sie ausgeführt werden, was sie derart teuer macht, dass ein wirtschaftlicher Betrieb nur bei wiederholter Regenerierung des Behandlungsmediums möglich ist.

Bei der Vorrichtung nach der FR-A 2 177 450 kommt noch hinzu, dass das zu behandelnde Wasser teilweise auch seitlich in die Patrone einströmen kann. Ein derartiges seitliches Einströmen ist jedoch unerwünscht, weil sich hierdurch um so kürzere Durchlaufwege ergeben, je tiefer das Wasser in die Patrone eindringt. Entsprechend unterschiedlich sind die Behandlungsergebnisse, so dass eine gleichbleibende, hohe Qualität des zu behandelnden Wassers nicht gewährleistet werden kann.

Aufgrund der vorgenannten Probleme mit den bekannten Vorrichtungen liegt der vorliegenden Erfindung die Aufgabe zugrunde, den Ersatz der erschöpften Austauscherharze in den Patronen einfacher und kostensparender zu gestalten und dennoch hohe Reinigungsqualität zu gewährleisten.

Diese Aufgabe wird erfindungsgemäss dadurch gelöst, dass die Patrone als Einwegbehälter mit einem für die innenseitige Anlage am Mantelgefäss passenden, nicht druckfesten Gehäuse ausgebildet ist.

Aufgrund dieser Ausbildung braucht die Patrone nicht mehr den Betriebsdruck aufzunehmen. Diesen fängt jetzt das Mantelgefäss aufgrund der innenseitigen Anlage der Patrone ab. Sie kann deshalb so dünnwandig und aus so billigem Material hergestellt werden, dass ihre Kosten die bei den bekannten Vorrichtungen dieser Art anfallenden Transport- und Regenerierungskosten bei weitem aufwiegen. Erstmals kann somit bei dieser Art Vorrichtung das Einwegprinzip in wirtschaftlich vertretbarer Weise verwirklicht werden, wodurch die Vorrichtung auch ausserhalb eines Servicenetzes von Regenerierstationen, beispielsweise in unterentwickelten Ländern, eingesetzt werden kann. Gerade in diesen Ländern werden derartige Vorrichtungen aber zunehmend gebraucht, da dort die Wasserqualität meist sehr schlecht ist.

Hinzu kommt, dass die Austauscherharze nach der Erschöpfung auch als Düngemittel verwendet werden können. Sie sind nämlich neutral und enthalten Aufbaustoffe für Pflanzen.

In Ausbildung der Erfindung ist vorgesehen, dass die Patrone im Bereich des Patronenrandes, der einem für den Patronenaustausch vorgesehenen Gefässdeckel benachbart ist, eine Abfasung zur Aufnahme einer Ringdichtung aufweist, wobei auf den Patronenrand ein Verschlussring zum Anpressen der Ringdichtung an die Patrone und das Mantelgefäss aufgeschraubt ist. Mit diesem Verschlussring wird somit die Ringabdichtung in den durch die Abfasung keilförmig ausgebildeten Ringraum zwischen Patrone und Mantelgefäss hineingepresst, wobei sowohl eine Abdichtung zur Verhinderung einer Kriechströmung zwischen Patrone und Mantelgefäss als auch eine kraftschlüssige Lagefixierung der Patrone bewirkt wird. Das Anpressen der Ringdichtung wird dabei begünstigt, wenn der Verschlussring an seiner unteren Aussenkante ebenfalls eine Abfasung aufweist. Zweckmässigerweise sollte die Patrone für den Verschlussring ein Aussengewinde aufweisen.

Die Erfindung sieht ferner vor, dass das Mantelgefäss aus dünnem, korrosionsfestem, hohe Festigkeitswerte aufweisendem Edelstahlblech besteht. Aus einem derartigen Blech lässt sich auf einfache Weise ein druckfestes Mantelgefäss herstellen, an dessen Innenseite sich die Patrone unter Einwirkung des Wasserdruckes anlegen kann. Als Material für die Patrone bietet sich Polyäthylen oder ein anderer Kunststoff mit ähnlichen Eigenschaften an, weil er relativ billig ist und sich sehr dünnwandig ausbilden lässt.

Nach einem weiteren Merkmal der Erfindung ist vorgesehen, dass im Bereich des Gefässbodens eine umlaufende Nut mit einem Dichtungsring vorgesehen ist, wobei die Nut, wie die Erfindung ferner vorsieht, in die Aussenseite der Patrone eingeformt ist. Dieser Dichtungsring bildet eine zusätzliche Sicherung gegen Kriechströmung. Sofern der Anschluss für den Wasserzulauf am Boden des Mantelgefässes angeordnet ist, verhindert dieser Dichtungsring darüber hinaus, dass die Patrone durch den Druck der aufsteigenden Kriechströmung zusammengedrückt wird.

Die erfindungsgemässe Vorrichtung kann weiterhin mit einem am Gefässdeckel im Bereich des Anschlusses für den Wasserablauf angeordneten Leitwertmesser versehen sein, mit dem sich anzeigen lässt, ob die Austauscherharze noch funktionsfähig sind.

Schliesslich sieht die Erfindung vor, dass die Patronen stirnseitig mit gelochten Deckeln versehen sind. Dadurch, dass diese Deckel nunmehr Teile der Patrone sind, wird die Herstellung des Mantelgefässes wesentlich vereinfacht. Zusätzlich kann zwischen der Oberfläche des Mischbettes und dem gelochten Deckel eine aus flüssigkeitsdurchlässigem und elastischem Werkstoff bestehende Verteilerplatte angeordnet sein, wodurch eine gleichmässige Verteilung des Wassers auch über den gesamten Querschnitt des oberen Teiles der Patrone sichergestellt wird.

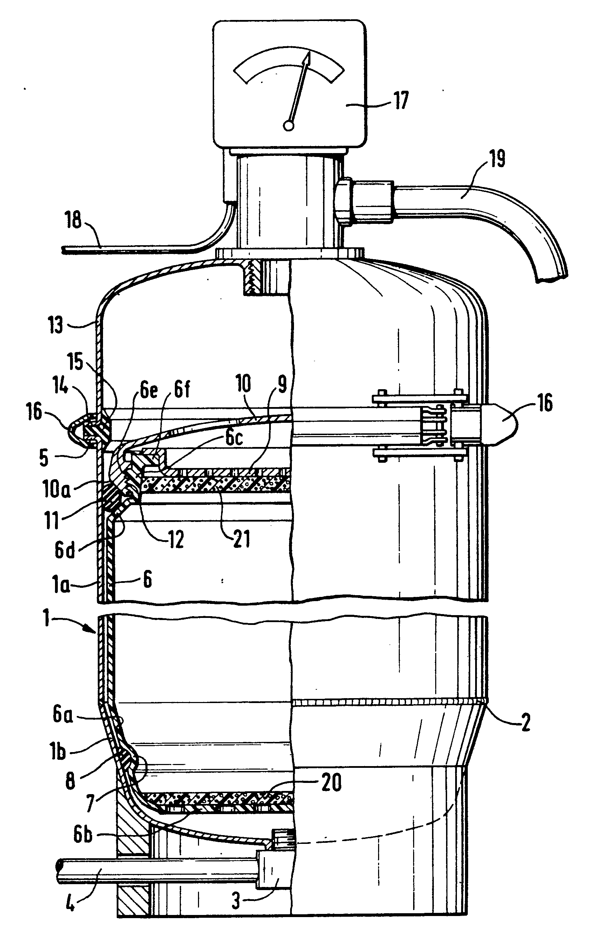

In der Zeichnung ist die Erfindung an Hand eines Ausführungsbeispieles, das die Vorrichtung in der linken Hälfte im Längsschnitt und in der rechten Hälfte in der Seitenansicht zeigt, näher veranschaulicht.

Die Vorrichtung weist ein Mantelgefäss 1, das aus hohe Festigkeitswerte aufweisendem Edelstahlblech hergestellt ist, mit einem im wesentlichen zylindrischen Teil 1a auf, der aus einem ebenen Blech geformt ist und dessen Längskante durch eine nichtdargestellte Schweissnaht verbunden sind. An der unteren Kante des zylindrischen Teiles 1a ist mittels einer Schweissnaht 2 ein gewölbter Boden 1b angeschweisst, der im unteren Teil eine Verschraubung 3 für ein Anschlussrohr 4 aufnimmt, das in einfacher Weise an eine Wasserleitung anschliessbar ist. Der obere Rand des zylindrischen Teiles 1a ist zu einem Flansch 5 ausgeformt. Die Teile 1a und 1b können auch aus einem tiefgezogenen Blech geformt sein.

Die Wandstärke des Mantelgefässes 1 beträgt etwa 0,8 mm und dient zur Aufnahme einer im wesentlichen zylindrischen Patrone 6, deren unterer Teil 6a der Form des Bodens 1b angepasst ist und durch einen gelochten Boden 3b abgeschlossen ist. In diesen unteren Teil 6a ist eine umlaufende, etwa halbrundförmige Nut 7 eingeformt, die der Aufnahme eines Dichtungsringes 8 dient, der sich gegen die Wand des Bodens 1b des Mantelgefässes 1 anlegt.

Die obere Öffnung der Patrone 6 weist einen verdickten Hals 6c auf, der durch eine Abfasung 6d mit dem zylindrischen Teil der Patrone 6 verbunden ist. Der Hals 6c ist aussen mit einem Gewinde 6e versehen und bildet einen Innenflansch 6f. Die Öffnung der Patrone 6 ist durch einen gelochten Deckel 9 verschlossen, der zweckmässig mit dem Hals 6c der Patrone 6 verschweissbar ist.

Auf das Gewinde 6e des Halses 6c ist ein ringförmiger, gelochter Verschlussring 10 aufgeschraubt, dessen untere Begrenzungskante eine Abfasung 10a aufweist, wobei der grössere Durchmesser des Verschlussringes 10 geringfügig kleiner ist als der Innendurchmesser des Mantelgefässes 1. In den Raum zwischen den beiden Abfasungen 6d und 10a ist eine Ringdichtung 11 eingelegt. Der Verschlussring 10 weist dabei ein Innengewinde 12 auf, mit dessen Hilfe er auf den Hals 6c aufgeschraubt werden kann, wobei sich die Ringdichtung 11 an der Innenwand des Mantelgefässes 1 anpresst.

Das Mantelgefäss 1 wird oben durch einen haubenförmigen Gefässdeckel 13 abgedeckt, der unten einen Flansch 14 aufweist. Zwischen den beiden Flanschen 5 und 14 ist ein im Querschnitt etwa T-förmiger Dichtungsring 15 eingelegt. Zur leichtlösbaren Verbindung der beiden Flanschen 5 und 14 und der dazwischengeschalteten Dichtung 15 dient ein die Flanschen 5 und 14 umfassender Spannring 16, der zum Behälterinneren hin konvergierende Flanken aufweist und in an sich bekannter Weise durch einen Kniehebelverschluss festgespannt ist. Auf den Gefässdeckel 13 ist ein Leitwertmesser 17 aufgeschraubt, der ein Kabel 18 zum Anschluss an eine elektrische Stromleitung und ein Wasserabflussrohr 19 zur Abführung des entsalzten Wassers aufweist.

Die Patrone 6 ist aus Polyäthylen beispielsweise im Vakuumblasverfahren hergestellt, wobei die Wandungen 6, 5a und 6d eine Wandstärke von etwa 1,4 bis 1,6 mm aufweisen. Auf diese Weise ist die Patrone 6 mit geringen Kosten herstellbar. Allerdings ist sie bei dieser Wandstärke nicht druckfest genug, um den üblichen Wasserleitungsdruck von ca. 8 atü aufnehmen zu können. Da sie sich jedoch an das druckfest ausgebildete Mantelgefäss 1 anlegen kann, entstehen hierdurch keine Festigkeitsprobleme. Für eine sichere Fixierung der Patrone 6 im Mantelgefäss 1 und zur Verhinderung einer Kriechströmung zwischen dem Mantelgefäss 1 und der Patrone 6 sind die beiden Dichtungen 8 und 11 vorgesehen.

Die Patrone 6 wird mit den Austauscherharzen nahezu gefüllt, wobei auf dem Boden 6b eine aus elastischem und flüssigkeitsdurchlässigem Werkstoff bestehende Auflageplatte 20 aufliegt. Auch die ebene Oberfläche der Austauscherharze wird mit einer aus elastischem und flüssigkeitsdurchlässigem Werkstoff hergestellten Auflageplatte 21 abgedeckt und dann mittels des Deckels 9 verschlossen. Auf diese Weise wird vermieden, dass ein von den Austauscherharzen nicht ausgefüllter Hohlraum in der Patrone entsteht und sichergestellt, dass die durchströmende Flüssigkeit gleichmässig über den gesamten Patronenquerschnitt verteilt wird und dadurch eine optimale Ausnutzung der Austauscherharze erreicht wird.

Die mit dem Ionenaustauschermischbett gefüllte Patrone 6 wird in das Mantelgefäss 1 mit leichtem, senkrecht gerichtetem Druck eingeführt und dann der Verschlussring 10 aufgeschraubt. Dadurch wird auf die Ringdichtung 11 ein axialer Druck ausgeübt, wodurch der untere Dichtungsring 8 fest an die konische Wand des Bodens 1b und die Ringdichtung 11 fest an den Mantel 1a angedrückt werden. Die Abfasungen 6d und 10a dienen dabei der Ringdichtung 11 als Widerlager.

Wird nun das Mantelgefäss 1 mit Druckwasser beaufschlagt, so verhindert der Dichtungsring 8 das Aufsteigen von Kriechströmung, wobei die Oberringdichtung 11 im wesentlichen ein Verschieben der Patrone 6 in axialer Richtung vermeidet. Der Druck des Leitungswassers wirkt auf den unteren Teil der Patrone 6 in voller Stärke, wird jedoch beim weiteren Aufsteigen durch das Mischbett zum Teil abgebaut. Die nicht druckfeste Wandung der Patrone 6 kann sich dabei in den Zwischenraum zwischen den Wandungen 1a und 6 ausdehnen und findet ihr Widerlager an der Wandung des druckfesten Mantelgefässes 1. Der erwähnte Zwischenraum zwischen den beiden Wandungen 1a und 6 hat noch den Vorteil, dass eventuelle Fertigungsungenauigkeiten bei der Herstellung des Mantelgefässes 1 ausgeglichen werden können.

**Patentanspruch**

1. Vorrichtung zur Vollentsalzung von Wasser mit einem zylindrischen, druckfesten Mantelgefäss, zwischen dessen Anschlüssen für den Wasserzu- und -ablauf eine an beiden Stirnseiten wasserdurchlässige Patrone mit einem Mischbett aus Kationen- und Anionenaustauscherharzen herausnehmbar fixiert und dabei gegen seitliches Vorbeiströmen abgedichtet ist, dadurch gekennzeichnet, dass die Patrone (6) als Einwegbehälter mit einem für die innenseitige Anlage am Mantelgefäss (1) passenden, nicht druckfesten Gehäuse ausgebildet ist.

2. Vorrichtung nach Anspruch 1, dadurch gekennzeichnet, dass die Patrone (6) im Bereich des Patronenrandes (6c), der einem für den Patronenaustausch vorgesehenen Ggefässdeckel (13) benachbart ist, eine Abfasung (6d) zur Aufnahme einer Ringdichtung (11) aufweist, wobei auf den Patronenrand (6c) ein Verschlussring (10) zum Anpressen der Ringdichtung (11) an die Patrone (6) und das Mantelgefäss (1) aufgeschraubt ist.

3. Vorrichtung nach Anspruch 2, dadurch gekennzeichnet, dass der Verschlussring (10) an seiner unteren Aussenkante ebenfalls eine Abfasung (10a) aufweist.

4. Vorrichtung nach Anspruch 2 oder 3, dadurch gekennzeichnet, dass die Patrone (6) ein Aussengewinde (6e) für den Verschlussring (10) aufweist.

5. Vorrichtung nach einem der Ansprüche 1 bis 4, dadurch gekennzeichnet, dass das Mantelgefäss (1) aus dünnem, korrosionsfestem, hohe Festigkeitswerte aufweisendem Edelstahlblech besteht.

6. Vorrichtung nach einem der Ansprüche 1 bis 5, dadurch gekennzeichnet, dass die Patrone (6) aus dünnem, nicht druckfestem Polyäthylen oder einem Kunststoff mit ähnlichen Eigenschaften besteht.

7. Vorrichtung nach einem der Ansprüche 1 bis 6, dadurch gekennzeichnet, dass im Bereich des Bodens (1b) des Mantelgefässes (1) eine umlaufende Nut (7) mit einem Dichtungsring (8) vorgesehen ist.

8. Vorrichtung nach Anspruch 7, dadurch gekennzeichnet, dass die Nut (7) in die Aussenseite der Patrone (6) eingeformt ist.

9. Vorrichtung nach Anspruch 7 oder 8, dadurch gekennzeichnet, dass der Anschluss (3) für den Wasserzulauf (4) am Boden (1b) des Mantelgefässes (1) angeordnet ist.

10. Vorrichtung nach Anspruch 9, gekennzeichnet durch einen am Gefässdeckel (13) im Bereich des Anschlusses für den Wasserablauf (19) angeordneten Leitwertmesser (17).

11. Vorrichtung nach einem der Ansprüche 1 bis 10, dadurch gekennzeichnet, dass die Patrone (6) stirnseitig mit gelochten Deckeln (6b, 9) versehen ist.

12. Vorrichtung nach Anspruch 11, dadurch gekennzeichnet, dass zwischen der Oberfläche des Mischbettes und dem gelochten Deckel (9) eine aus flüssigkeitsdurchlässigem und elastischem Werkstoff bestehende Verteilerplatte (21) angeordnet ist.

**Claims**

1. An apparatus for the complete desalination of water comprising a cylindrical pressure-resistant tank, a cartridge, water-permeable on both front sides having a mixed bed of cation and anion-exchange resins being removably affixed between the connections thereof for the water discharge and being sealed against lateral flowing past, characterized in that the cartridge (6) is provided as a non-returnable container, having a non-pressure resistant housing, fitting for the internal contact on the tank (1).

2. A device according to claim 1, wherein said cartridge (6) has a chamfer (6d) or bevel for receiving a circumferential gasket (11) in the area of the cartridge edge adjacent to a tank cover (13) provided for gasket exchange, whereby a clamp ring (10) is screwed on the border (6c) of cartridge (6) and said tank (1).

3. A device according to claim 2, wherein said clamp ring (10) further includes a chamfer (10a) or bevel on its bottom outside border.

4. A device according to claim 3, wherein said cartridge (6) has outside threads (6e) for receiving said clamp ring (10).

5. A device according to claim 4, wherein said tank (1) is of thin, corrosion-resistant, high strength superrefined steel plate.

6. A device according to one of claims 1 to 5, characterized in that the cartridge (6) consists of thin non-pressure resistant polyethylene or a synthetic material having similar properties.

7. A device according to claim 3, wherein a circular groove (7) with a sealing ring (8) is provided in the area of the base (1b) of said tank (1).

8. A device according to claim 7, wherein said groove (7) is molded in the outside of said cartridge (6).

9. A device according to claim 7, wherein the connection for the water input (3) is found on the base (16) of said tank (1).

10. A device according to claim 9 and including a conductometer (17) on the cover (13) of said tank (1) in the area of the water discharge (19) connection.

11. A device according to claim 10, wherein said cartridge (6) is provided with perforated covers (6b, 9) on the ends.

12. A device according to claim 11, wherein a distributor plate (21) of liquid-permeable and flexible material is found between the top surface of the mixed bed and perforated cover (9).

**Revendications**

1. Dispositif pour la déminéralisation totale de l'eau, comportant un récipient d'enveloppe cylindrique résistant à la pression présentant, entre ses raccordements d'amenée et d'évacuation d'eau, une cartouche perméable à l'eau à ses deux côtés frontaux, contenant une couche mixte de résines échangeuses de cations et d'anions, fixée de façon amovible et rendue étanche pour empêcher l'écoulement de l'éviter latéralement, caractérisé par le fait que la cartouche (6) est sous la forme d'un récipient jetable présentant une enveloppe ne résistant pas à la pression et ajustée de manière à s'appliquer à l'intérieur du récipient d'enveloppe (1).

2. Dispositif selon la revendication 1, caractérisé par le fait que la cartouche (6) présente, dans la région du bord (6c) voisin d'un couvercle de récipient (13) prévu pour le changement de cartouche, un biseau (6d) destiné à recevoir un joint annulaire (11), sur le bord (6c) de la cartouche étant vissée une bague de fermeture (10) servant à presser le joint annulaire (11) contre la cartouche (6) et le récipient d'enveloppe (1).

3. Dispositif selon la revendication 2, caractérisé par le fait que la bague de fermeture (10) présente également un biseau (10a) à son bord extérieur inférieur.

4. Dispositif selon l'une des revendications 2 ou 3, caractérisé par le fait que la cartouche (6) présente un filetage extérieur (6e) pour la bague de fermeture (10).

5. Dispositif selon l'une des revendications 1 à 4, caractérisé par le fait que le récipient d'enveloppe (1) est formé de tôle d'acier fin mince, résistant à la corrosion, présentant de grandes valeurs de résistance mécanique.

6. Dispositif selon l'une des revendications 1 à 5, caractérisé par le fait que la cartouche (6) est formée d'un polyéthylène mince ne résistant pas à la pression ou d'une matière synthétique de propriétés similaires.

7. Dispositif selon l'une des revendications 1 à 6, caractérisé par le fait que dans la région du fond (1b) du récipient d'enveloppe (1) est prévue une gorge circonférentielle (7) munie d'un anneau de joint (8).

8. Dispositif selon la revendication 7, caractérisé par le fait que la gorge (7) est formée dans la face extérieure de la cartouche (6).

9. Dispositif selon l'une des revendications 7 ou 8, caractérisé par le fait que le raccordement (3) d'arrivée d'eau (4) est disposé au fond (1b) du récipient d'enveloppe (1).

10. Dispositif selon la revendication 9, caractérisé par le fait qu'il comporte un résistivimètre (17) disposé sur le couvercle de récipient (13) dans la région du raccordement d'évacuation d'eau (19).

11. Dispositif selon l'une des revendications 1 à 10, caractérisé par le fait que la cartouche (6) est munie, à ses côtés frontaux, de couvercles perforés (6b, 9).

12. Dispositif selon la revendication 11, caractérisé par le fait qu'entre la surface extérieure de la couche mixte et le couvercle perforé (9) est disposée une plaque distributrice (21) formée de matériau perméable au liquide et élastique.